Europäisches Patentamt

European Patent Office

Office européen des brevets

(11) Publication number: **0 173 430**
**B1**

(12) **EUROPEAN PATENT SPECIFICATION**

(45) Date of publication of patent specification: **07.02.90**

(51) Int. Cl.⁵: **G 05 D 23/275**

(21) Application number: **85304610.0**

(22) Date of filing: **27.06.85**

(54) **Current-supply of an electronic remote thermostat over its switching-line.**

| | |
|---|---|
| (30) Priority: **29.06.84 US 625484** | (73) Proprietor: **HONEYWELL INC.**<br>**Honeywell Plaza**<br>**Minneapolis Minnesota 55408 (US)** |
| (43) Date of publication of application:<br>**05.03.86 Bulletin 86/10** | |
| | (72) Inventor: **Bohan, John E., Jr.**<br>**4820 Fremont Avenue South**<br>**Minneapolis Minnesota 55409 (US)** |
| (45) Publication of the grant of the patent:<br>**07.02.90 Bulletin 90/06** | |
| | (74) Representative: **Frohwitter, Bernhard, Dipl.-Ing. et al**<br>**Bardehle-Pagenberg-Dost-Altenburg & Partner**<br>**Patent- und Rechtsanwälte Galileiplatz 1**<br>**8000 München 80 (DE)** |
| (84) Designated Contracting States:<br>**BE DE FR GB IT NL SE** | |
| (56) References cited:<br>**CA-A-1 035 448**<br>**DE-C- 735 952**<br>**US-A-3 948 441**<br><br>**IEEE TRANSACTIONS ON COMPONENTS, HYBRIDS AND MANUFACTURING, vol. CHMT-5, no. 2, June 1982, pages 225-230, New York, US; PERKINS et al.: "A new PTC resistor for power applications"** | (56) References cited:<br>**RADIO, FERNSEHEN, ELEKTRONIK, vol. 29, no. 5, 1980, pages 311-314; GRAICHEN: "Theorie, Kennwerte und anwendung keramischer kaltleiter"** |

Courier Press, Leamington Spa, England.

## Description

The present invention relates to temperature control systems, and more specifically to systems wherein a control unit which draws a continuous small trickle current is in series with an operating unit.

Systems in which a control unit is in series with an operating unit are common. The control unit may typically be a thermostat, and the operating unit may be a furnace control unit comprising a relay. The two units are connected in series across the mains supply.

The control unit (thermostat) may often include apparatus beyond the simple temperature sensor; for example, there may be a clock which sets the set-point temperature back at night. Such additional apparatus has often, in the past, been mechanical, but present systems often use electrical or electronic circuitry, e.g. a digital clock. It is common for such circuitry to draw a continuous small trickle current, e.g. for maintaining a back-up battery fully charged or for keeping certain RC circuitry fully energized for standby power in the event of a power failure.

US—A—3 948 441 relates to a time variable thermostat as described above and in the preamble of the claim of the present invention. The described thermostat system has a low resistance actuator coil of the operating unit.

The operating unit (e.g. furnace control relay) can be made with a high impedance to reduce the current flow and hence the heat generated therein, to keep its design limit temperature low. However, since it must obviously not respond to the trickle current from the control device, it must allow an operating current to flow (when the thermostat is closed) which is substantially larger than the trickle current. Thus the trickle current not only acts as a continuous small source of heat in the operating unit, but also requires the operating current for the operating unit to be high enough for satisfactory discrimination, thereby resulting in greater heating by the operating current when that flows.

It is the object of the present invention to decrease heat generation in the control unit and to provide a better discrimination between trickle current and actuating current.

This problem is solved by the parallel combination of the operative element of the operating unit and PTC (Positive Temperature Coefficient) resistor as described in the characterizing part of the claim.

There are several examples for the parallel combination of a PTC resistor and a relay coil in the prior art. Applications cited include overcurrent protection (IEEE Transactions on Components, Hybrids and Manufacturing, Vol. CHMT-5, No. 2, June 1982, pages 225 to 230, "A new PTC resistor for power applications"), pull up delay (Radio, Fernsehen, Electronik, Vol. 29, No. 5, 1980, pages 311 to 314 "Theorie, Kennwerte und Anwendung keramischer Kaltleiter"), reduction of the difference between pull-up current and drop-out current (DE—C—735 952).

None of the cited documents describes the parallel combination of a PTC resistor and a high impedance relay coil. The effect of a small trickle current flowing continuously through a relay coil across which a PTC resistor is connected is not dealt with in the prior art.

By the inventive arrangement of a PTC resistor across a high impedance actuator coil it is possible to use a small actuating current and yet to achieve a good discrimination between trickle current and actuating current. The small actuating current has the advantage that only little heat is produced in the control unit. The combination of both measures (PTC resistor, high impedance actuator coil) allows the use of a fairly large trickle current to improve the battery charging situation.

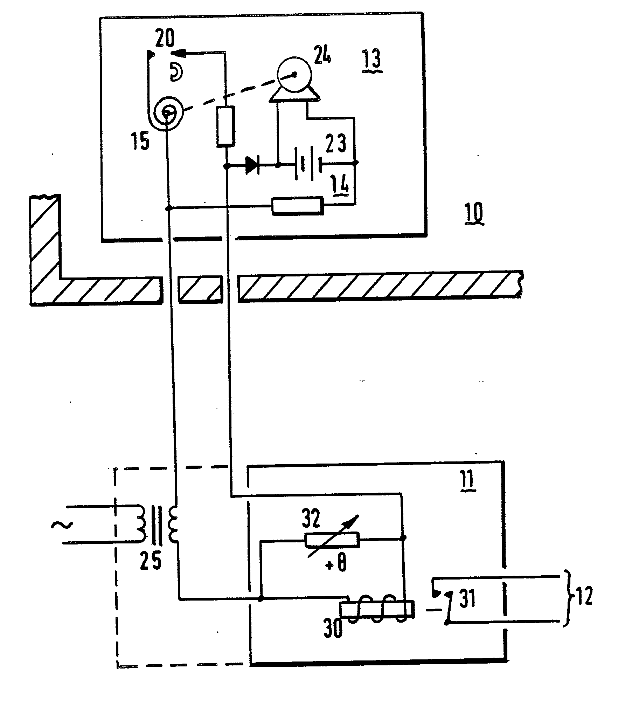

An embodiment of the invention will now be described, by way of example, with reference to the drawing, which is a schematic circuit diagram.

Space 10 is the living quarters of a house in which the space temperature is controlled by controlling heat produced by a furnace or the like (not shown) controlled by an output circuit 12 of an operating furnace control unit 11. Located in space 10 is a control unit 13 comprising a thermostat or temperature responsive switch means of a conventional type having a power storing circuit 14 requiring a small trickle current for maintaining the circuit active during an open cycle of the thermostat. Specifically, temperature responsive element or bimetal 15 operates a switch 20 to close the circuit. The circuit 14 comprises a battery 23 for supplying current to a motor 24 for operating the thermostat, which is a night temperature setback thermostat. Circuit 14 requires a trickle current during the open or off cycle of thermostat switch 20 from the power supply 25 for maintaining the circuit 14 active.

The operating unit or furnace control 11 comprises an actuator 30 for operating a switch 31 to bring about operation of the temperature conditioning apparatus (furnace). Conventionally, control 30 would be preferred to have a low impedance, as a high impedance would make it difficult to distinguish between the normal operating current when the thermostat switch 20 is closed and the trickel current passing through circuit 14.

Connected in parallel with relay winding 30 is a positive temperature coefficient (PTC) resistor 32 which has a resistance which is low when the temperature of the resistor is low and increases as the temperature increases.

The operating unit 11 may contain the power supply 25 as well as the relay 30 and PTC resistor 32. The placement of the power supply in the control panel with the relay or outside would be a matter of design as, in some cases, the heat dissipation from the transformer or power supply 25 would cause the temperature of the operating unit to become excessive.

During the normal off cycle of the temperature control system of the Figure, a trickle current is supplied to the circuit 14 for charging battery 23 through a low resistance or impedance PTC impedance 32. The magnitude of the trickle current maintains the battery charged. The heat dissipated through PTC impedance 32 is small with this trickle current. Upon a call for a change in the temperature of space 10 and the closing of the thermostat switch 20, a higher voltage is applied to the device 11. The high voltage raises the current through the PTC impedance, causing its temperature to be increased and its resistance or impedance to increase. The increased voltage produces, however, a linear increase in current through the coil 30.

Without the use of a PTC impedance, a conventional impedance of constant resistance would have to be used, either as a separate resistor in parallel with the coil 30 or as the inherent resistance of the coil 30. In either case, the current drawn by the operating unit 11 would vary linearly with the voltage applied. However, the use of the PTC resistor 32 has the effect of producing a diversion of the current between the PTC resistor 32 and the coil 30, depending on the applied voltage. For a low applied voltage, when only trickle current is flowing, a high proportion of the current flows through the resistor 32. When the switch 20 closes, there is relatively little increase in current through the resistor 32, compared to the large increase in current through the coil 30. The heat dissipation on the unit 11 is thereby minimized.

## Claim

A temperature control system comprising a control unit (13) connected in series with an operating unit (11) across a power supply (25), the control unit including temperature sensing means (15, 20) and means (14) comprising a battery (23) which draw a continuous small trickle current, characterized in that the operative element (30) of the operating unit (11) has a high impedance and has a positive temperature coefficient (PTC) resistor (32) having a low resistance when its temperature is low and an increasing resistance as the temperature increases, and being connected across said operative element (30), so as to carry a major part of the current (trickle current) from the control unit (13) when the temperature sensing means are open contacted but a minor proportion of the current therefrom when the temperature sensing means are close contacted.

## Patentanspruch

Temperatursteuerungssystem, das eine Steuereinheit (13) aufweist, die in Serie mit einer Betriebseinheit (11) über eine Spannungsversorgung (25) verbunden ist, wobei die Steuereinheit Temperaturfühlereinrichtungen (15, 20) und eine Einrichtung (14) umfasst, die eine Batterie (23) aufweist, die einen kontinuierlichen kleinen Erhaltungsstrom zieht, dadurch gekennzeichnet, daß das betriebsmäßige Element (30) der Betriebseinheit (11) eine hohe Impedanz und einen Widerstand (32) mit positivem Temperaturkoeffizienten (PTC) hat, der einen niedrigen Widerstandswert hat, wenn seine Temperatur gering ist, und dessen Widerstandswert mit dem Ansteigen der Temperatur ansteigt und der über das betriebsmäßige Element (30) verbunden ist, so daß er einen Hauptteil des Stromes (Erhaltungsstrom) der Steuereinheit (13) führt, wenn die Temperaturfühlereinrichtungen einen offenen Kontakt haben, jedoch einen geringeren Anteil des Stromes davon führt, wenn die Temperaturfühlereinrichtungen einen geschlossenen Kontakt haben.

## Revendication

Système de commande de température comprenant un élément de commande (13) relié en série avec un élément de fonctionnement (11) par l'intermédiaire d'une source d'alimentation (25), l'élément de commande comprenant des moyens de détection de température (15, 20) et des moyens (14) comprenant une batterie (23) qui consomme un faible courant continu de maintien, caractérisé en ce que l'organe actif (30) de l'élément de fonctionnement (11) présente une impédance élevée et possède une résistance (32) à coefficient de température positif (PTC) ayant une faible résistance quand sa température est basse et une résistance accrue quand sa température augmente, et reliée aux bornes dudit organe actif (30), de manière à transporter une partie majeure du courant (courant de maintien) à partir de l'élément de commande (13) quand les moyens de détection de température sont en contact ouvert, mais une proportion mineure de ce courant à partir dudit élément de commande quand les moyens de détection de température sont en position de contact fermé.